# EUROPÄISCHE PATENTANMELDUNG

(11) **EP 1 382 649 A1**
(43) Veröffentlichungstag der Anmeldung: **21.01.2004**
(21) Anmeldenummer: 03012963.9
(22) Anmeldetag: 07.06.2003
(51) Int. Cl.: C09D 175/06, C08G 18/32, C08G 18/79, C08G 18/42, C08G 18/80

(54) **Verwendung von PUR-Pulverlacken für Coil Coating-Beschichtungen mit mattem Erscheinungsbild**

(30) Priorität: 20.07.2002 DE 10233104
(71) Anmelder: Degussa AG, 40474 Düsseldorf (DE)
(72) Erfinder: Wenning, Andreas, Dr., 48301 Nottuln (DE); Weiss, Jörn Volker, Dr., 45721 Haltern am See (DE)

(57) **Zusammenfassung**

Die Erfindung beschreibt die Verwendung von Polyurethan-Pulverlacken aus Polyharnstoffen, Polyestern und Vernetzern für matte Pulver-Coil Coating-Beschichtungen, ein Verfahren zur Herstellung derartiger Beschichtungen sowie die mit derartigen Lacken beschichteten Bänder.

## Beschreibung

Die Erfindung beschreibt die Verwendung von Polyurethan-Pulverlacken aus Polyharnstoffen, Polyestern und Vernetzern für matte Pulver-Coil Coating-Beschichtungen, ein Verfahren zur Herstellung derartiger Beschichtungen sowie die mit derartigen Lacken beschichteten Bänder.

Seit 1970 sind hitzehärtende pulverförmige Massen bekannt, die man durch Reaktion eines hydroxylgruppenhaltigen Harzes mit einem maskierten Polyisocyanat erhält. Von den maskierten Polyisocyanaten haben sich als PUR-Pulverhärter ∈-Caprolactam-blockierte Isophorondiisocyanataddukte durchgesetzt. Die mit diesen Härtern hergestellten PUR-Pulver werden infolge ihrer überlegenen Witterungs- und Wärmefarbstabilität zur Beschichtung verschiedenster Gegenstände aus Metall eingesetzt. Derartige Pulver werden z. B. in DE 27 35 497 beschrieben. Mit diesen Pulvern werden fertig geformte Metallteile Stück für Stück beschichtet (post coated metal).

Coil Coating hingegen ist ein Verfahren zur Beschichtung von Metallbändern mit Geschwindigkeiten von 60 bis 200 m/min. Es werden Bleche, vorzugsweise aus Stahl oder Aluminium gereinigt und mit einem Lack beschichtet. Anschließend werden diese Bleche der Weiterverarbeitung zugeführt, wo sie ihre eigentliche Form erhalten. Die wichtigsten Einsatzgebiete sind Trapezprofile, beschichtet mit Wetter beständigen Lacken, z. B. für Fassaden und Dächer sowie Türen, Fensterrahmen, Tore, Dachrinnen und Jalousien. Für den Innenbereich finden Coil Coating beschichtete Bleche für Trennwände und Deckenelemente ihre Hauptanwendung. Andere Einsatzgebiete sind aber auch Stahlmöbel, Regalbau, Ladenbau und Geräteverkleidungen. Lampen und Leuchten bilden ein weiteres wichtiges Anwendungssegment. Ebenso gibt es im Fahrzeugbereich eine breite Anwendungspalette. LKW-Aufbauten und Automobilanbauteile werden vielfach aus vorbeschichteten Materialien gefertigt.

Zum Beschichten des eingesetzten Substrats wird in der Regel eine Vorbehandlung durchgeführt. Als erste Lackschicht wird auf der späteren Sichtseite ein Primer in einer Schichtdicke von 5 bis 10 µm aufgetragen. Nach dem ersten Trockner Durchlauf erfolgt dann die eigentliche Decklackierung. Sie weist nach dem Trocknen eine Schichtdicke von etwa 20 µm auf. Teilweise wird diese Oberfläche noch mit einer temporären Schutzfolie im heißen Zustand kaschiert. Dadurch soll sie vor mechanischen Verletzungen geschützt werden. Parallel zu der Sichtseitenbeschichtung werden auch die Rückseiten mitlackiert. Als Primer werden beispielsweise Polyesterharze verwendet. Für Coil Coating beschichtete Fassaden und Dächer im korrosiven Industrieklima werden als Primer epoxidhaltige Systeme eingesetzt. In erstere Linie werden Flüssiglacke mit unzähligen Farbtönen als Decklack verwendet. Je nach Anwendungsbereich kommen z. B. Polyester-, Polyurethan- oder PVDF-Decklacke zur Anwendung. Die Schichtdicken der Decklacke liegen üblicherweise bei ca. 20 µm.

Neben den flüssigen Primern und Decklacken werden auch Pulverlacke zur Beschichtung von Metallbändern im Coil Coating-Verfahren verwendet. Pulverlacke haben gegenüber den flüssigen Lacken den großen Vorteil, dass sie lösemittelfrei und damit ökologischer sind. Allerdings war ihr Anteil an den Coil Coating-Lacksystemen bisher relativ gering.

Der Grund lag zum einen an den hohen Schichtdicken der Pulverlacke von über 40 µm. Sie führen zu optischen Defekten, da die Oberfläche nicht mehr gänzlich Poren frei ist. Durch die WO 97/47400 wurde dieser Nachteil beseitigt. Sie beschreibt ein Verfahren zur Beschichtung von Metallbändern, mit dem Pulver-Schichtdicken von weniger als 20 µm erzielt werden können.

Ein zweiter Nachteil im Vergleich zu Flüssiglacken lag in der recht langsamen Bandgeschwindigkeit beim Auftragen des Pulverlackes. Mit elektrostatischen Sprühpistolen lassen sich Metallbänder mit Pulverlack nur mit Anlagengeschwindigkeiten von maximal 20 m/min beschichten. Durch die MSC Powder Cloud™-Technologie, die z. B. von F.D. Graziano, XXIIIrd International Conference in Organic Coatings, Athen, 1997, Seiten 139 - 150 oder von M. Kretschmer, 6. DFO-Tagung Pulverlack-Praxis, Dresden, 2000, Seiten 95 - 100 beschrieben wird, lassen sich nun Bandgeschwindigkeiten von 60 bis 100 m/min realisieren.

PUR-Pulverlacke sind u. a. für ihre hohe Bewitterungsstabilität, exzellenten Verlauf und gute Flexibilität bekannt. Für den Einsatz in Coil Coating-Lacken reichte die Flexibilität der bisher bekannten Systeme jedoch oft nicht aus. Daher wurden neue PUR-Pulverlacke entwickelt, die der extremen Flexibilitätsanforderung von Coil Coating-Lacken genügen. So beschreiben z.B. die DE 101 59 768 und DE 101 59 488 hochflexible PUR-Pulverlacke, die zur Beschichtung metallischer Substrate nach dem Coil Coating-Verfahren geeignet sind. Damit ist auch der dritte entscheidenden Nachteil gegenüber konventionellen Flüssiglacken ausgeräumt.

In Bereich der Coil Coating-Lacke besteht ein großes Interesse an Beschichtungen mit matter Oberfläche. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes kleinere oder größere Mengen Füllstoffe, wie z. B. Kreide, fein verteiltes Siliciumoxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens führen zu Schwankungen im Oberflächenglanz. Die Reproduzierbarkeit des Matteffektes ist nicht gewährleistet.

Es bestand die Aufgabe, neue PUR-Pulverlacke für die Beschichtung von Metallbändem mit mattem Erscheinungsbild nach dem Coil Coating-Verfahren zu finden, die einfach herstellbar sind und dessen Matteffekt beliebig einstellbar sein sollte, bei gleich bleibenden guten mechanischen Eigenschaften der Pulverlackbeschichtungen.

Die Aufgabe wurde gemäß den Patentansprüchen gelöst. Es war überraschend, dass durch die Kombination von Polyharnstoff und Polyester PUR-Pulverlacke erhalten werden konnten, dessen Beschichtungen metallischer Substrate nach dem Coil Coating-Verfahren neben niedrigen Glanzgraden auch hervorragende mechanische und optische Eigenschaften aufwiesen.

Gegenstand der Erfindung ist die Verwendung von Polyurethan-Pulverlacken zur Beschichtung von Metallbändern nach dem Coil Coating-Verfahren, wobei die Polyurethan-Pulverlacke
A) 3 - 25 Gew.-% Polyharnstoff;
B) 35 - 75 Gew.-% mindestens eines amorphen und/oder (semi)kristallinen Polyesters mit einer Hydroxylzahl von 5 bis 250 mg KOH/g und einem Schmelzpunkt von 50 bis 130 °C;
C) 5 - 30 Gew.-% mindestens eines Vernetzers auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe; enthalten und pro OH-Gruppe der Komponente B) 0,5 bis 1,2 NCO-Gruppen der Komponente C) zur Verfügung stehen.

Die PUR-Pulverlacke sind in der EP 1 184 433 und in der EM 020122 (internes Aktenzeichen) beschrieben.

Die verwendeten Polyharnstoffe bestehen mindestens aus einem mindestens difünktionellen Amin und einem Isocyanat. Dabei beträgt das NCO/NH₂-Verhältnis beider Komponenten üblicherweise 0,9 bis 1,1 zu 1.

### Polyharnstoffe sind bekannt und werden beispielsweise beschrieben in:

Houben-Weyl E 20/2 (1987) Seite 1721 - 1751;

Houben-Weyl XIV/2 (1963) Seite 165 - 171.

Im Rahmen der Erfindung können alle spröden, hochschmelzenden Polyharnstoffe, z. B. solche aus aliphatischen, (cyclo)aliphatischen, cycloaliphatischen und aromatischen Diaminen und/oder Polyaminen (C₅ - C₁₈) und den entsprechenden oder auch anderen Isocyanaten (als Diisocyanate wie auch deren Oligomere, z. B. Isocyanurate) eingesetzt werden.

Besonders geeignet sind die Diisocyanate und/oder Isocyanurate von Isophorondiisocyanat (IPDI), Hexamethylendiisocyanat (HDI) und 4,4'-Dicyclohexylmethandiisocyanat (HMDI).

Eine bevorzugte Ausführungsform der Erfindung ist die Verwendung von Polyharnstoffen auf der Basis von nicht aromatischen Aminen und Isocyanaten, wie z. B. Isophorondiamin (IPD) und Isophorondiisocyanat (IPDI) und/oder HDI, wobei das Diisocyanat allein, als Isocyanurat und in solchen Mischungen einsetzbar ist. Die bevorzugt eingesetzten Polyharnstoffe sind in der DE 100 42 322 beschrieben und Teil der Offenbarung dieser Anmeldung.

Bei der Komponente B) handelt es sich um amorphe und/oder (semi)kristalline Polyester.

Die amorphen Polyester B) haben eine Funktionalität von 2,0 bis 5,0, bevorzugt 2,0 bis 4,2, eine OH-Zahl von 5 bis 250 mg KOH/g, insbesondere 20 bis 250 mg KOH/g, eine Viskosität bei 160 °C von < 60 000 mPa·s, einen Schmelzpunkt von 50 °C bis 130 °C, bevorzugt von 70 bis 120 °C und eine Glasübergangstemperatur von > 40 °C.

Die (semi)kristallinen Polyester B) haben eine Funktionalität von 2,0 bis 4,0, eine OH-Zahl von 5 bis 250 mg KOH/g, insbesondere von 5 bis 150 mg KOH/g, einen Schmelzpunkt von 50 °C bis 130 °C und eine Glasübergangstemperatur von < -10 °C.

Prinzipiell sind alle bekannten linearen und/oder verzweigten Polyole und Polycarbonsäuren und/oder deren Ester und/oder Anhydride im Rahmen der Erfindung zur Herstellung des Polyesters B) geeignet. Geeignete Polyole werden z. B. in den DE 27 35 497 und 30 04 903 beschrieben. Geeignete Polycarbonsäuren werden z. B. in der DE 101 59 488 beschrieben.

Bevorzugt eingesetzte Polyole sind Monoethylenglykol, Diethylenglycol, Hydroxypivalinsäureneopentylglykolester, Butandiol-1,4, Pentandiol-1,2, Pentandiol-1,5, Hexandiol-1,6, Dodecandiol-1,12, Cyclohexandiol, Neopentylglykol, Bis-(1,4-hydroxymethyl)-cyclohexan, Trimethylolpropan, Glyzerin oder Pentaerythrit.

Bevorzugt eingesetzte Carbonsäuren und/oder deren Ester und/oder Anhydride sind Terephthalsäure, Isophthalsäure, Phthalsäure, Adipinsäure, Azelainsäure, Bernsteinsäure, Sebacinsäure, Dodecandisäure, Hexahydroterephthalsäure, Hexahydrophthalsäure, 1,4-Cyclohexandicarbonsäure, Trimellitsäure oder Pyromellitsäure.

Die Polyester können aus an sich bekannte Weise durch Kondensation von Polyolen und Polycarbonsäuren in einer Inertgasatmosphäre bei Temperaturen von 100 bis 260 °C, vorzugsweise von 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963, bei C. R. Martens, Alkyd Resins, 51 - 59, Reinhold Plastics Appl. Series, Reinhold Publishing Comp., New York, 1961 oder in DE 27 35 497 und DE 30 04 903, beschrieben ist.

Als Vernetzer C) auf der Basis von Polyisocyanaten sind prinzipiell die bekannten Härter auf dem Gebiet der Pulverlacke einsetzbar. Bevorzugt werden blockierungsmittelhaltige wie auch intern blockierte Polyisocyanate eingesetzt. Sie werden z. B. in der DE 21 05 777, 25 42 191, 27 35 497, 30 39 824, 30 30 572, 30 30 513, 37 39 549, 101 59 768 und 101 59 488 beschrieben.

So können die erfindungsgemäßen Pulverlacke Vernetzer C), basierend auf blockierten Polyisocyanaten, blockierten Isocyanuraten und Uretdionen allein oder in Mischungen, enthalten. Bevorzugt werden die Ausgangskomponenten ausgewählt aus IPDI, HDI und HMDI.

Als Blockierungsmittel können die bekannten eingesetzt werden. Bevorzugt werden Caprolactam, Triazole, Oxime oder Pyrazole, allein oder in Mischungen eingesetzt.

Das Verhältnis von Harz (Komponente B) zu Vernetzer (Komponente C) wird so gewählt, dass pro OH-Gruppe des Harzes 0,5 bis 1,2, vorzugsweise 0,8-1,0, NCO-Gruppen zur Verfügung stehen.

Die in den erfindungsgemäßen PUR-Pulverlacken enthaltenen Hilfs- und Zusatzstoffe D) sind z.B. Verlaufmittel, Pigmente, Füllstoffe, Farbstoffe, Katalysatoren, Licht- und Hitzestabilisatoren, Antioxidantien und/oder Effektadditive. Diese sind üblicherweise in Mengen von 0,5 - 50 Gew.-% enthalten.

Zur Herstellung der gebrauchsfertigen Pulverlacke werden die Komponenten A), B), C) und D) in der Schmelze homogenisiert. Dies kann in geeigneten Apparaten, z. B. in beheizbaren Knetern, vorzugsweise aber durch Extrudieren erfolgen, wobei Temperaturgrenzen von 130 bis 140 °C nicht überschritten werden sollten. Die extrudierte homogenisierte Masse wird nach Abkühlen auf Raumtemperatur und nach geeigneter Zerkleinerung zum sprühfertigen Pulver vermahlen und auf eine Korngröße < 100 µm abgesiebt.

Gegenstand der Erfindung ist auch ein Verfahren zur Beschichtung von Metallbändern nach dem Coil Coating-Verfahren durch Verwendung von Polyurethan-Pulverlacken, die
A) 3 - 25 Gew.-% Polyharnstoff;
B) 35 - 75 Gew.-% mindestens eines amorphen und/oder (semi)kristallinen Polyesters mit einer Hydroxylzahl von 5 bis 250 mg KOH/g und einem Schmelzpunkt von 50 bis 130 °C;
C) 5 - 30 Gew.-% mindestens eines Vernetzers auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe, enthalten, wobei pro OH-Gruppe der Komponente B) 0,5 bis 1,2 NCO-Gruppen der Komponente C) zur Verfügung stehen,
sowie die beschichteten Metallbänder selbst. Die erfindungsgemäß beschichteten Metallbänder nach dem Coil Coating-Verfahren weisen Glanzgrade von 1 bis 70 (60 °-Winkel) auf.

Das Auftragen des sprühfertigen Pulvers auf geeignete Substrate kann nach den bekannten Verfahren, z. B. elektrostatisches Pulversprühen, Wirbelsintern oder elektrostatisches Wirbelsintern erfolgen. Nach dem Pulverauftrag werden die beschichteten Werkstücke zur konventionellen Aushärtung in einem Ofen 60 Minuten bis 30 Sekunden auf eine Temperatur von 160 bis 250 °C, vorzugsweise 30 bis 1 Minuten bei 170 bis 240 °C erhitzt. Bei der Verwendung eines Coil Coating Ofens betragen die Aushärtebedingungen gewöhnlich 90 bis 10 s bei Temperaturen von 200 bis 350 °C.

Um die Geliergeschwindigkeit der wärmehärtbaren Pulverlacke zu erhöhen, können Katalysatoren zugesetzt werden. Als Katalysatoren verwendet man z. B. Organozinnverbindungen wie Dibutylzinndilaurat, Zinn(II)octoat, Dibutylzinnmaleat oder Butylzinn-tris(2-ethylhexanoat). Die Menge an zugesetztem Katalysator beträgt 0,01 bis 1,0 Gew.-%, bezogen auf die gesamte Pulverlackmenge.

Mit der erfindungsgemäß verwendeten Lackzusammensetzung lassen sich äußerst flexible, überbrennbare und witterungsbeständige Pulver Coil Coating-Beschichtungen herstellen. Der Glanzgrad dieser Beschichtungen auf den Metallbändern ist je nach Einsatzzweck variabel einsetzbar. Erfindungsgemäß variiert der Glanzgrad von 1 bis 70 (60 °-Winkel).

Nachfolgend wird der Gegenstand der Erfindung anhand von Beispielen erläutert.

### Beispiele

### A) Polyharnstoff

### Beispiel 1

Der Polyharnstoff (PH) bestand aus 36 Gew.-% Isophorondiamin (IPD), 31 Gew.-% Isophorondiisocyanat (IPDI) und 32 Gew.-% IPDI-Isocyanurat. Das Produkt war weiße, spröde und in üblichen Lösemitteln unlöslich. Oberhalb von 250 °C trat Zersetzung ein.

### Beispiel 2

Der Polyharnstoff (PH) bestand aus 28 Gew.-% Isophorondiamin (IPD) und 72 Gew.-% IPDI-Isocyanurat. Das Produkt war weiße, spröde und in üblichen Lösemitteln unlöslich. Oberhalb von 250 °C trat Zersetzung ein.

### B) Polyester

### Beispiel 1

Der Polyester hatte folgende Zusammensetzung: als Säurekomponente: 100 mol-% Bernsteinsäureanhydrid; als Alkoholkomponente: 100 mol-% Butandiol-1,4. Der Polyester hatte eine OH-Zahl von 31 mg KOH/g, eine Säurezahl von 2 mg KOH/g und einen Schmelzpunkt von 120 °C.

### Beispiel 2

Der Polyester hatte folgende Zusammensetzung: als Säurekomponenten: 93 mol-% Terephthalsäure, 2,5 mol-% Isophthalsäure, 4,5 mol-% Adipinsäure; als Alkoholkomponenten: 88 mol-% Neopentylglykol, 4 mol-% Pentandiol-1,2, 8 mol-% Trimethylolpropan. Der Polyester hatte eine OH-Zahl von 47 mg KOH/g, eine Säurezahl von 7,0 mg KOH/g und eine Glasübergangstemperatur von 56 °C.

### C) Herstellung blockierter Isocyanatkomponenten

### Beispiel 1

699,8 g Desmodur N 3300 (Polyisocyanato-Isocyanurat auf Basis Hexamethylendiisocyanat der Fa. Bayer) und 1632,8 g VESTANAT T 1890 (Polyisocyanato-Isocyanurat auf Basis Isophorondiisocyanat der Fa. Degussa) wurden auf 100 °C aufgeheizt. Es wurden 3,5 g Dibutylzinndilaurat zugegeben. Danach wurden portionsweise 1163,9 g ε-Caprolactam zugegeben. Eine Stunde nach der letzten Portion an -Caprolactam war die Reaktion beendet. Danach wurde das Reaktionsgemisch auf Raumtemperatur abgekühlt. Das Reaktionsprodukt hatte einen Gehalt an freien NCO-Gruppen von 0,4 %, einen NCO-Gesamt-Gehalt von 12,0 % und einen Schmelzbereich von 88 - 91 °C.

### Beispiel 2

Ein Stoffstrom aus 2307,7 g IPDI-Uretdion und 3,1 g DBTL wird mit einer Temperatur von 60 bis 110 °C in das erste Gehäuse eines Zweischneckenextruders eingespeist. Gleichzeitig werden 839,4 g einer Mischung aus Butandiol-1,4, dem Diester aus Butandiol-1,4 und Adipinsäure (OH-Zahl der Mischung 802 mg KOH/g) mit einer Temperatur von 25 bis 150 °C zudosiert. Das Reaktionsprodukt wird abgekühlt, gebrochen und gemahlen. Es hat einen NCO-Frei-Gehalt von 0,1 % und einen NCO-Latent-Gehalt von 13,5 %.

### D) Polyurethan-Pulverlacke

### Allgemeine Herstellungsvorschrift

Die zerkleinerten Produkte - blockiertes Polyisocyanat (Vemetzer), Polyester, Verlaufmittel, Entgasungsmittel und Katalysator-Masterbatch - werden mit dem Weißpigment in einem Kollergang innig vermischt und anschließend im Extruder bis maximal 130 °C homogenisiert. Nach dem Erkalten wird das Extrudat gebrochen und mit einer Stiftmühle auf eine Korngröße < 63 µm gemahlen. Das so hergestellte Pulver wird mit einer elektrostatischen Pulverspritzanlage bei 60 kV auf entfettete, Eisen phosphatierte Stahlbleche appliziert und in einem Coil Coating Ofen eingebrannt.

Die Formulierungen enthielten 30 Gew.-% Kronos 2160 (Titandioxid der Fa. Kronos), 1 Gew.-% Resiflow PV 88 (Verlaufmittel der Worlée-Chemie), 0,5 Gew.-% Benzoin (Entgasungsmittel der Fa. Merck-Schuchard) und 0,1 Gew.-% Dibutylzinndilaurat (Katalysator der Fa. Crompton Vinyl Additives GmbH). Das OH/NCO-Verhältnis betrug 1:1.

**Tabelle 1:**

| Lackdaten weißpigmentierter, matter PUR-Pulver-Coil Coating-Lacke | | | |
|---|---|---|---|
| Polyharnstoff A) | 10,0 g A) 1 | 25,0 g A) 1 | 15,0 g A) 1 |
| Polyester B) | 9,2 g B) 1 36,7 g B) 2 | 14,1 g B) 1 21,3 g B) 2 | 41,3 g B) 2 |
| Isocyanat C) | 12,5 g C) 1 | 8,0 g C) 2 | 12,1 g C) 1 |
| Einbrennbedingung | 232 °C/65 sec | 232 °C/65 sec | 232 °C/65 sec |
| Schichtdicke (µm) | 50 - 61 | 31 - 44 | 35 - 59 |
| Glanz 60°-W. | 60 | 25 | 45 |
| Tiefung (mm) | > 10 | > 10 | > 10 |
| KS dir./indir. (inch lb) | > 80 / > 80 | > 80 / > 80 | > 80 / > 80 |
| T-Bend | 0T | 0T | 0 T |

Die Abkürzungen in der Tabelle bedeuten:
- Glanz 60°-W.: = Messung des Glanzes nach Gardner (ASTM-D 5233)
- Tiefung: = Tiefung nach Erichsen (DIN 53 156)
- KS dir./indir.: = direkter und indirekter Kugelschlag (ASTM D 2794 - 93)
- T-Bend: = Verformungstest (ECCA T 7)

## Patentansprüche

1. Verwendung von Polyurethan-Pulverlacken zur Beschichtung von Metallbändern nach dem Coil Coating-Verfahren, wobei die Polyurethan-Pulverlacke
A) 3 - 25 Gew.-% Polyharnstoff;
B) 35 - 75 Gew.-% mindestens eines amorphen und/oder (semi)kristallinen Polyesters mit einer Hydroxylzahl von 5 bis 250 mg KOH/g und einem Schmelzpunkt von 50 bis 130 °C;
C) 5 - 30 Gew.-% mindestens eines Vernetzers auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe; enthalten und pro OH-Gruppe der Komponente B) 0,5 bis 1,2 NCO-Gruppen der Komponente C) zur Verfügung stehen.

2. Verwendung nach Anspruch 1,
**dadurch gekennzeichnet,**
**dass** der Polyharnstoff A) aus
mindestens einem mindestens difunktionellem Isocyanat
und
mindestens einem mindestens difunktionellen Amin besteht, und ein NCO/NH₂-Verhaltnis von 0,9 - 1,1 zu 1 aufweist.

3. Verwendung nach mindestens einem der Ansprüche 1 oder 2,
**dadurch gekennzeichnet,**
**dass** der Polyharnstoff aus einem Isocyanat und/oder Isocyanurat besteht.

4. Verwendung nach Anspruch 3,
**dadurch gekennzeichnet,**
**dass** das Isocyanat oder Isocyanurat aus IPDI, HDI und/oder HMDI ausgewählt wird.

5. Verwendung nach mindestens einem der vorherigen Ansprüche,
**dadurch gekennzeichnet,**
**dass** der Polyharnstoff aliphatische, (cyclo)aliphatische, cycloaliphatische, aromatische Diamine und/oder Polyamine mit 5 - 18 Kohlenstoffatomen enthält.

6. Verwendung nach Anspruch 5,
**dadurch gekennzeichnet,**
**dass** als Amin IPD eingesetzt wird.

7. Verwendung nach mindestens einem der vorherigen Ansprüche,
**dadurch gekennzeichnet,**
**dass** die Komponente B) ein amorpher Polyester ist.

8. Verwendung nach Anspruch 7,
**dadurch gekennzeichnet,**
**dass** der Polyester eine Funktionalität von 2,0 bis 5,0, eine OH-Zahl von 5 bis 250 mg KOH/g, eine Viskosität bei 160 °C von < 60 000 mPa·s und einen Schmelzpunkt von 50 °C bis 130 °C aufweist.

9. Verwendung nach mindestens einem der Ansprüche 1 bis 6,
**dadurch gekennzeichnet,**
**dass** die Komponente B) ein (semi)kristalliner Polyester ist.

10. Verwendung nach Anspruch 9,
**dadurch gekennzeichnet,**
**dass** der Polyester eine Funktionalität von 2,0 bis 4,0, eine OH-Zahl von 5 bis 250 mg KOH/g, einen Schmelzpunkt von 50 °C bis 130 °C und eine Glasübergangstemperatur von <-10 °C aufweist.

11. Verwendung nach mindestens einem der vorherigen Ansprüche,
**dadurch gekennzeichnet,**
**dass** für den Vernetzer C) auf der Basis von blockierten Polyisocyanaten, blockierten Isocyanuraten und/oder Uretdionen die Diisocyanate IPDI, HDI und/oder HMDI als Ausgangskomponenten enthalten sind.

12. Verwendung nach mindestens einem der vorherigen Ansprüche,
**dadurch gekennzeichnet,**
**dass** der Vernetzer C) mit Caprolactam, Triazolen, Oximen und/oder Pyrazolen blockiert ist.

13. Verwendung nach mindestens einem der vorherigen Ansprüche,
**dadurch gekennzeichnet,**
**dass** als Hilfs- und Zusatzstoffe D) Verlaufmittel, Pigmente, Füllstoffe, Farbstoffe, Katalysatoren, Licht- und Hitzestabilisatoren, Antioxidantien und/oder Effektadditive enthalten sind.

14. Verfahren zur Beschichtung von Metallbändem nach dem Coil Coating-Verfahren durch Verwendung von Polyurethan-Pulverlacken enthaltend
A) 3 - 25 Gew.-% Polyharnstoff;
B) 35 - 75 Gew.-% mindestens eines amorphen und/oder (semi)kristallinen Polyesters mit einer Hydroxylzahl von 5 bis 250 mg KOH/g und einem Schmelzpunkt von 50 bis 130°C;
C) 5 - 30 Gew.-% mindestens eines Vernetzers auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe,
wobei pro OH-Gruppe der Komponente B) 0,5 bis 1,2 NCO-Gruppen der Komponente C) zur Verfügung stehen.

15. Verfahren nach Anspruch 14,
**dadurch gekennzeichnet,**
**dass** Verbindungen nach mindestens einem der Ansprüche 2 bis 13 als Ausgangskomponenten eingesetzt werden.

16. Mit Polyurethan-Pulverlacken nach dem Coil Coating-Verfahren beschichtete Metallbänder
mit mattem Erscheinungsbild,
**dadurch gekennzeichnet,**
**dass** die matten Polyurethan-Pulverlacke
A) 3 - 25 Gew.-% Polyharnstoff;
B) 35 - 75 Gew.-% mindestens eines amorphen und/oder (semi)kristallinen Polyesters mit einer Hydroxylzahl von 5 bis 250 mg KOH/g und einem Schmelzpunkt von 50 bis 130 °C;
C) 5 - 30 Gew.-% mindestens eines Vernetzers auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe, enthalten, wobei pro OH-Gruppe der Komponente B) 0,5 bis 1,2 NCO-Gruppen der Komponente C) zur Verfügung stehen.

17. Beschichtete Metallbänder nach Anspruch 17,
**dadurch gekennzeichnet,**
**dass** die Polyurethan-Pulverlacke Verbindungen nach mindestens einem der Ansprüche 2
bis 13 enthalten.

18. Beschichtete Metallbänder nach Anspruch 16 oder 17,
**dadurch gekennzeichnet,**
**dass** diese Glanzgrade von 1 bis 70 (60 °-Winkel) aurweisen.
